# DEMANDE DE BREVET EUROPEEN

(11) **EP 4 759 488 A1**
(43) Date de publication de la demande: **17.06.2026**
(21) Numéro de dépôt: 24307066.1
(22) Date de dépôt: 10.12.2024
(51) Int. Cl.: B25J 9/16

(54) **PROCÉDÉ DE MODIFICATION D'UN ENVIRONNEMENT PAR UN SYSTÈME ROBOTISÉ**

(71) Demandeur: Innodura TB, 69140 Rillieux-la-Pape (FR); Bouygues Construction SA, 78061 Saint-Quentin en Yvelines (FR)
(72) Inventeur: ROBIN, Maxime, 69270 Fontaines Saint Martin (FR); RAULT, Bastien, 69100 Villeurbanne (FR); DEPOORTER, Laurent, 78061 Saint-Quentin en Yvelines (FR); JALLOULI, Ahmed, 78061 Saint-Quentin en Yvelines (FR)
(74) Mandataire: Germain Maureau

(57) **Abrégé**

La présente invention concerne un procédé de modification d'un environnement (E) dans lequel est placé un système (1) caractérisé en ce qu'il comprend la mise en oeuvre par des moyens de traitement de données (5) d'étapes de :
(a) Obtention d'une représentation initiale (Ri) d'au moins une partie (P) dudit environnement (E) en fonction de données acquises par un détecteur (9) ;
(b) Comparaison de la représentation initiale (Ri) avec une représentation attendue (Ra) de ladite partie (P) dudit environnement (E).
(c) Détermination, en fonction du résultat de ladite comparaison, d'une trajectoire d'un robot (10) permettant de déplacer un outil (3) sur ladite partie (P) dudit environnement (E) en vue d'obtenir une modification dudit environnement telle qu'une représentation finale (Rf) de ladite partie (P) dudit environnement (E) coïncide avec ladite représentation attendue (Ra) ;
(d) Commande synchronisée du robot (10) et dudit outil (3) de sorte à mettre en oeuvre ladite trajectoire et modifier, pendant ladite trajectoire, ledit environnement (E) au moyen dudit outil (3).

## Description

### DOMAINE TECHNIQUE GÉNÉRAL

La présente invention concerne le domaine de la robotisation de processus industriels et notamment de génie civil. La présente invention concerne plus précisément un procédé de modification d'un environnement dans lequel est placé un système comprenant un outil de modification de surface.

### ETAT DE L'ART

Le génie civil et notamment la construction de grands ouvrages utilise de manière croissante des outils robotisés.

On connait par exemple des robots télécommandés pour faire des tâches dangereuses et pénible telles que de la démolition ou l'excavation.

Plus récemment, le robot ROBY 850 de la Demanderesse est utilisé sur les gros chantiers de tunnels. Il permet grâce à un bras le percement ainsi que la pose des chevilles, dans des tunnels (soit de l'ordre de la centaine de milliers de chevilles pour un tunnel de quelques kilomètres), de manière semi-automatique et pas simplement télécommandée (on a seulement un pilote qui supervise et sécurise l'opération du robot) avec une précision de l'ordre du millimètre.

En effet cette tâche s'avère particulièrement risquée pour les personnels car elle se passe à plusieurs mètres de hauteur, dans des positions délicates, et nécessite un outillage lourd, de sorte qu'il est très intéressant de pouvoir la confier un robot.

ROBY 850 apporte entière satisfaction, mais il serait souhaitable d'utiliser plus massivement des robots pour toutes les tâches dangereuses et pénibles en génie civil, par exemple tout ce qui est surfaçage des parois du tunnel avant la pose des voussoirs. Cependant, un robot tel que ROBY est dédié à une tâche précise (ici le percement et la pose d'ancrage) et n'est pas capable d'en réaliser d'autres sans refonte du système de pilotage des trajectoires du robot.

Il serait ainsi souhaitable de disposer d'un robot de génie civil plus universel.

De plus des tâches telles que le travail sur paroi nécessitent en outre une prise en compte complète de l'environnement qui n'est aujourd'hui pas à la portée des robots existants.

La présente invention vient améliorer la situation.

### PRÉSENTATION DE L'INVENTION

La présente invention se rapporte donc selon un premier aspect à un procédé de modification d'un environnement dans lequel est placé un système comprenant :
- Au moins un outil apte à modifier ledit environnement ;
- au moins un robot muni d'articulations actionnées pour la manipulation dudit outil ;
- des moyens de traitement de données ;
- au moins un détecteur ;
le procédé étant caractérisé en ce qu'il comprend la mise en oeuvre par les moyens de traitement de données d'étapes de :
(a) Obtention d'une représentation initiale d'au moins une partie dudit environnement en fonction de données acquises par ledit détecteur ;
(b) Comparaison de la représentation initiale avec une représentation attendue de ladite partie dudit environnement ;
(c) Détermination, en fonction du résultat de ladite comparaison, d'une trajectoire du robot permettant de déplacer ledit outil sur ladite partie dudit environnement en vue d'obtenir une modification dudit environnement telle qu'une représentation finale de ladite partie dudit environnement coïncide avec ladite représentation attendue ;
(d) Commande synchronisée du robot et dudit outil de sorte à mettre en oeuvre ladite trajectoire et modifier, pendant ladite trajectoire, ledit environnement au moyen dudit outil.

Selon des caractéristiques avantageuses et non limitatives :
L'étape (a) comprend la localisation dans l'environnement de ladite partie en fonction des données acquises par le détecteur.

Ledit robot est mobile dans ledit environnement, l'étape (a) comprenant également le déplacement dudit robot dans l'environnement de sorte à se positionner en vis-à-vis de ladite partie.

Le procédé comprend une étape (a0) de division dudit environnement en un ensemble de parties, et la mise en oeuvre du procédé pour chacune des parties dudit ensemble.

Ladite représentation attendue de ladite partie dudit environnement est prédéterminée.

L'étape (b) comprend la génération de ladite représentation attendue de ladite partie dudit environnement en fonction de ladite représentation initiale.

Le procédé comprend une étape (e) d'obtention de ladite représentation finale de ladite partie dudit environnement en fonction de données acquises par ledit détecteur, et de vérification qu'elle coïncide avec ladite représentation attendue.

Le procédé comprend la répétition des étapes (b) à (d) si ladite représentation finale ne coïncide pas avec ladite représentation attendue, en utilisant la représentation finale comme nouvelle représentation initiale.

Ledit détecteur est une caméra, en particulier stéréoscopique, et lesdites représentations initiale, attendu et finale sont des modèles tridimensionnels.

L'étape (c) comprend une sous-étape (c1) de détermination d'une ou plusieurs opérations nécessaires dudit outil en fonction du résultat de ladite comparaison ; et une sous-étape (c2) de détermination de la trajectoire permettant de déplacer séquentiellement l'outil de sorte à mettre en oeuvre chacune desdites opérations nécessaires dudit outil.

La sous-étape (c1) est une sous-étape de détermination d'une ou plusieurs positions cibles dudit outil en fonction du résultat de ladite comparaison, avec des conditions d'opération de l'outil à chaque position cible dudit outil en vue d'obtenir ladite modification dudit environnement.

La sous-étape (c2) est une sous-étape de détermination de la trajectoire permettant de placer séquentiellement l'outil dans chacune des positions cibles déterminées, en vue d'opérer ledit outil à chaque position cible déterminée dans lesdites conditions d'opération de l'outil associées à ladite position cible.

La sous-étape (c1) est une sous-étape de détermination d'une ou plusieurs trajectoires d'opération dudit outil 3 en fonction du résultat de ladite comparaison, avec les conditions d'opération de l'outil à chaque trajectoire d'opération dudit outil en vue d'obtenir ladite modification dudit environnement.

La sous-étape (c2) est alors une sous-étape de détermination de la trajectoire comprenant séquentiellement lesdites trajectoires d'opération déterminées de l'outil, en vue d'opérer ledit outil lors de chacune des trajectoire d'opérations déterminée dans lesdites conditions d'opération de l'outil associées à ladite trajectoires d'opération.

Ledit outil est un outil de modification de la surface, ladite modification de l'environnement étant une modification de l'état de surface d'une paroi dudit environnement.

Ledit environnement est un ouvrage de bâtiment ou génie civil.

La trajectoire met l'outil en contact de la surface de ladite partie de l'environnement de sorte à modifier cette surface.

Selon un deuxième aspect, l'invention concerne un système pour la modification d'un environnement dans lequel est placé ledit système, comprenant :
- Au moins un outil apte à modifier ledit environnement ;
- au moins un robot muni d'articulations actionnées pour la manipulation dudit outil ;
- des moyens de traitement de données ;
- au moins un détecteur ;
caractérisé en ce que les moyens de traitement de données sont configurés pour :
- Obtenir une représentation initiale d'au moins une partie dudit environnement en fonction de données acquises par ledit détecteur ;
- comparer la représentation initiale avec une représentation attendue de ladite partie dudit environnement ;
- Déterminer, en fonction du résultat de ladite comparaison, une trajectoire du robot permettant de déplacer ledit outil sur ladite partie dudit environnement en vue d'obtenir une modification dudit environnement telle qu'une représentation finale de ladite partie dudit environnement coïncide avec ladite représentation attendue ;
- Commander de manière synchronisée le robot et ledit outi de sorte à mettre en oeuvre ladite trajectoire et modifier, pendant ladite trajectoire, ledit environnement au moyen dudit outil.

Selon un troisième et un quatrième aspect, l'invention concerne un produit programme d'ordinateur comprenant des instructions de code pour l'exécution d'un procédé selon le premier aspect de modification d'un environnement dans lequel est placé un système ; et un moyen de stockage lisible par un équipement informatique sur lequel est enregistré un produit programme d'ordinateur comprenant des instructions de code pour l'exécution d'un procédé selon le premier aspect de modification d'un environnement dans lequel est placé un système.

### PRÉSENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig. 1] la figure 1 est un schéma général d'un système pour la mise en oeuvre du procédé selon l'invention ;
[Fig. 2]la figure 2 illustre un mode de réalisation du système pour la mise en oeuvre du procédé selon l'invention ;
[Fig. 3]la figure 3 est un logigramme représentant les étapes d'un mode de réalisation du procédé selon l'invention.
[Fig. 4]la figure 4 représente un cas particulier de mode par passes lors de la mise en oeuvre du procédé selon l'invention

### DESCRIPTION DÉTAILLÉE

### Architecture

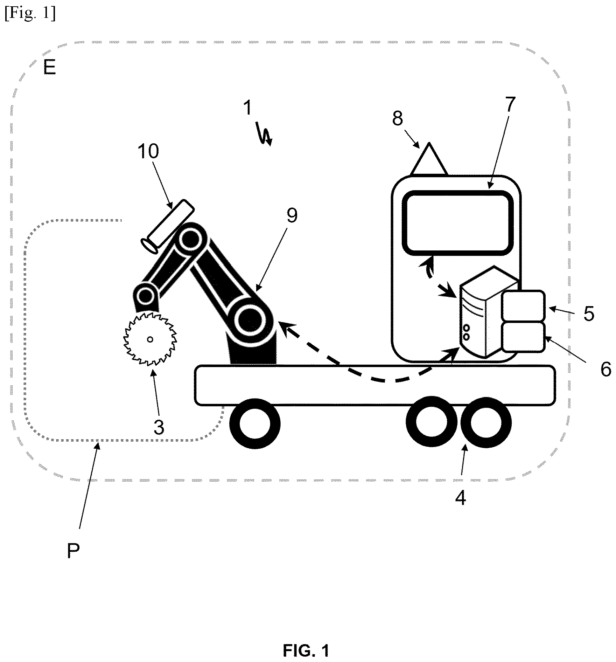

En référence à la **figure 1****,** la présente invention concerne un procédé de modification d'un environnement E dans lequel est placé un système 1, ledit environnement présentant au moins une partie P qui est le fragment de l'environnement E qui va effectivement être modifié, et qui correspond en pratique à l'espace élémentaire gérable par le système 1, au vu de ses dimensions. Ainsi, si l'on souhaite modifier un espace plus grand de l'environnement E, on peut définir une pluralité de parties P dudit environnement, pour chacune desquelles le présent procédé va être mis en oeuvre à tour de rôle. A ce titre, ledit environnement E peut directement être divisé en un ensemble de parties P, pour chacune desquelles le présent procédé va être mis en oeuvre de sorte à modifier tout ledit environnement E.

A noter que lesdites parties P peuvent le cas échéant présenter un léger recouvrement de sorte à garantir la précision des modifications dans tout l'environnement E y compris aux interfaces des parties P.

Ladite modification de surface est par exemple associée aux opérations de construction et au bâtiment.

Ledit environnement E est typiquement un ouvrage de bâtiment ou génie civil, en particulier un mur, une dalle, un tunnel, un tablier, etc. Alors chaque partie P est un fragment de la surface de cet ouvrage. Alternativement, l'environnement E pourrait être un terrain, un bloc rocheux, etc. On décrira l'exemple préféré d'un tunnel mais on décrira de nombreux exemples.

Par modification de l'environnement E, on entend une altération de cet environnement, i.e. effet réel et définitif sur cet environnement E, de sorte à provoquer des changements de forme, des retraits ou ajouts de matière, au moyen d'un outil 3 dudit système qui sera décrit plus loin. Il ne s'agit pas par exemple de simplement déplacer un objet dans l'environnement E.

En particulier, ladite modification de l'environnement E est préférentiellement une modification de l'état de surface d'une paroi dudit environnement E, consistant typiquement à creuser, poncer, percer (i.e. casser/abraser) ou inversement enduire ladite surface (dépôt par exemple de plâtre), et de manière générale « décaler » cette surface, i.e. modifier dans un sens ou l'autre. Paroi ici doit être interprété au sens large, et peut être par exemple le sol, un mur, un plafond, etc.

A ce titre ledit outil 3 est avantageusement un outil de de modification de la surface, tel qu'un perforateur, une foreuse, un burineur une tête d'abattage, un outil de surfaçage tel qu'une ponceuse, etc. ou inversement une buse d'enduction. Ce pourrait également être un godet si l'on souhaite creuser le sol, etc.

L'homme du métier saura transposer l'invention à tout autre outil en particulier utilisé en génie civil.

Le système 1 comprend en outre des moyens de traitement de données 5 et au moins un robot 10. A noter qu'il peut y avoir plusieurs robots, notamment dans le cas de plusieurs outils 3 (voir plus loin).

Ledit robot 10 peut être mobile dans ledit environnement E, et à ce titre comprendre des moyens de déplacement 4 tels que des roues ou des chenilles. Le robot 10 peut encore être monté sur rails, par exemple le long d'un tunnel.

Les moyens de traitement de données 5 sont typiquement un processeur, et sont en particulier destinés à contrôler le robot 10 et outil 3 et à traiter des données. Ces moyens 5 sont par exemple les moyens de traitement de données d'un ordinateur du système 1 ou encore d'un serveur distant.

Le système 1 comprend en outre typiquement des moyens de stockage de données 6 (une mémoire, à nouveau potentiellement celle du PC et/ou du serveur), une éventuelle interface 7 (par exemple un écran tactile), et des moyens de géolocalisation 8 du robot 10 dans l'environnement E tels qu'un GPS ou une centrale inertielle, en particulier dans le cas d'un robot 10 mobile.

Selon un mode de réalisation du système 1 illustré par la figure 1, le robot 10 est monté sur une plateforme telle qu'une remorque déplaçable, comprenant une cabine pour un opérateur, cette cabine comprenant un ordinateur et une interface de pilotage, i.e. présentant les moyens 5, 6, 7 et 8.

Selon un autre mode de réalisation du système 1, au moins les moyens 5, 6 et 7 peuvent être déportés à l'extérieur du robot 10 et de ses éventuels moyens de déplacement 4, soit à proximité (connexion par câble ou réseau sans fil tel que Wifi) soit à distance et être ceux d'un serveur distant (connexion via un réseau étendu tel qu'internet).

Dans tous les cas, le système 1 comprend en outre au moins un détecteur 9, i.e. un « scanner », permettant d'observer l'environnement E et notamment de fournir des données pour reconnaitre et localiser la partie P, également connectés aux moyens de traitement 5. On pourra utiliser tout capteur de rayonnement (notamment optique) fournissant des données permettant de reconstruire un nuage de points tridimensionnel, par exemple une caméra, en particulier stéréoscopique. Par exemple, ledit détecteur 9 peut acquérir deux images bidimensionnelles (« visible », en particulier couleur, i.e. RGB, mais alternativement en niveaux de gris) selon des points de vues voisins (dites images jumelles) à partir desquelles le nuage de points peut être reconstruit, et comprendre pour cela deux caméras. Alternativement, le détecteur 9 permet d'obtenir une image de profondeur par toute technologie connue, par exemple un LIDAR, un sonar, ou encore une caméra et un projecteur de lumière structurée, etc. Comme expliqué on pourra avoir plusieurs détecteurs 9 de sorte à multiplier les points de vue et le cas échéant prévenir des occultations.

Dans tous les cas, le détecteur 9 est généralement disposé montée sur le robot 10, de sorte à voir l'environnement E, et dans tous les cas apte à acquérir un nuage de points tridimensionnel, et généralement une image bidimensionnelle. Alternativement ou en complément, le détecteur 9 peut être apte à acquérir des textures de l'environnement E (les textures pouvant être utilisées pour isoler des zones de la partie P pour les privilégier - exemple d'une zone manifestement irrégulière - ou au contraire les éviter - exemple d'une inclusion métallique telle qu'un ancrage - lors la modification de la surface).

### Robot

Le système comprend au moins un robot 10 muni d'articulations actionnées 11 pour la manipulation dudit outil 3.

En d'autres termes, le robot 10 est directement équipé dudit outil 3. On comprendra que ce dernier peut être monté sur le robot 10 (i.e. de manière fixe), ou que ce dernier dispose lui-même d'un organe de préhension permettant de saisir ledit outil 3 et le cas échéant d'en changer. On peut avoir alternativement ou en complément plusieurs robots 10, pouvant notamment partager les mêmes moyens de déplacement 4 mais disposant chacun d'articulations actionnées 11 pour la manipulation d'un outil 3, de sorte à disposer simultanément de plusieurs outils 3 utilisables, par exemple un burineur (pour le gros du travail) et une ponceuse pour la finition. On note que disposer d'un organe de préhension permet comme expliqué d'alterner les outils 3 en cours de route, tout en n'ayant qu'un robot 10.

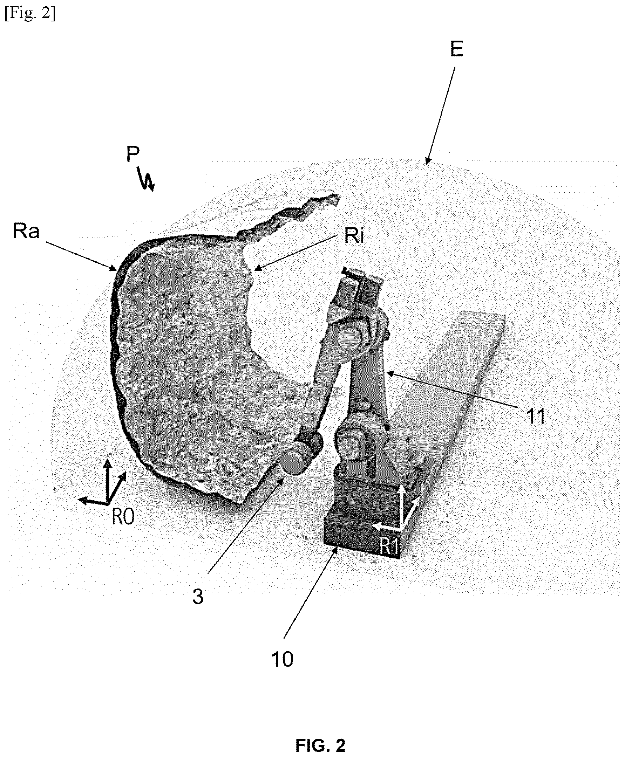

On appelle généralement « bras robot » un robot tel que le présent robot 10, car les articulations actionnées 11 ou « joints » lui permettent de changer de position et ainsi de déplacer l'outil 3. Dans l'exemple de la **figure 2****,** le robot 10 est de type bras polyarticulé télescopique à 6+1 articulations actionnées 11 (6 axes, la 7^{e} articulation étant le caractère télescopique du bras), mais tout autre architecture sera possible, y compris des robots cartésiens ou encore des robots à câble, car la notion d'articulations actionnées sera interprétée largement. Alternativement ou en complément, le bras robot peut être sur une plateforme élévatrice (de sorte à ce que le robot 10 puisse atteindre avec l'outil 3 des points plus élevés par exemple à la voute d'un tunnel), qui sera considéré comme une articulation supplémentaire.

L'éventuel organe de préhension est typiquement un changeur d'outils, actionnable indépendamment des articulations, de sorte à « saisir » ou « lâcher » un outil 3, et située généralement à l'extrémité du bras de sorte que toutes les articulations 11 concourent à déplacer cet organe de préhension. Similairement, dans le cas d'un outil 3 fixé, il est situé généralement à l'extrémité du bras de sorte que toutes les articulations 11 concourent à déplacer cet outil 3.

Le détecteur 9 est typiquement également à l'extrémité du bras, de sorte à bouger de manière solidaire de l'outil 3 mais il peut être sur une autre articulation ou même disposé de manière fixe. On peut par exemple avoir plusieurs détecteurs 9 disposés de manière fixe sur la plateforme de part et d'autre du robot 10 de sorte à voir tout l'environnement E.

Par commodité, dans la suite de la description, on désignera comme « position » d'un robot 10 la valeur du vecteur des positions de chaque articulation, noté [j1, j2, j3, j4, j5, j6] dans le cas du robot 6-axes. On suppose qu'on dispose d'un modèle dynamique du robot permettant de mettre en concordance une position spatiale [X, Y, Z] (dans un repère donné, en particulier orthonormé, tel que celui de l'environnement E) de l'outil 3 avec une position [j1, j2, j3, j4, j5, j6] du robot 10.

### Procédé

On va définir le cadre général du procédé et le principe de l'invention, et on décrira ensuite un mode de réalisation préféré.

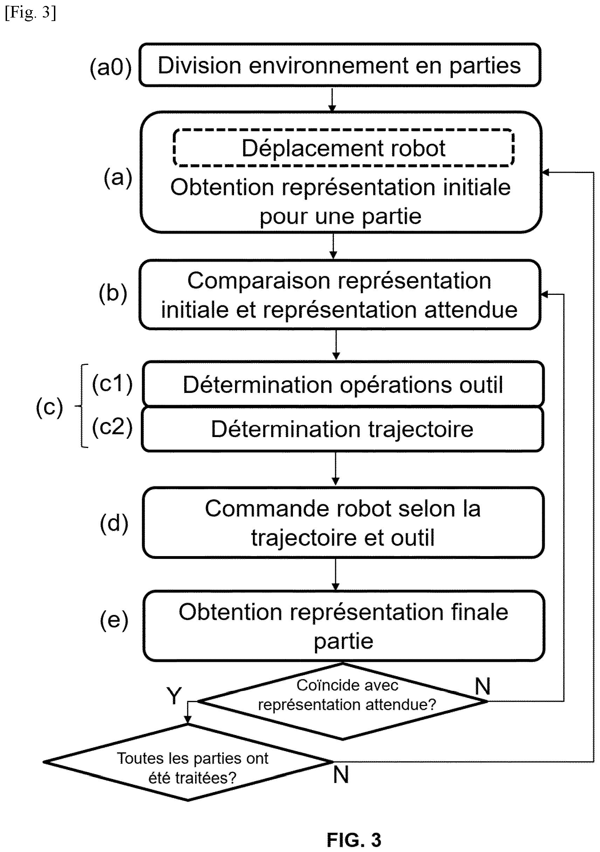

En référence à la **figure 3****,** le procédé, mis en oeuvre par les moyens 5, commence par une étape (a0) optionnelle de division dudit environnement E (ou du moins d'une partie significative dudit environnement E) en un ensemble de parties P (en d'autres termes partitionnement), notamment si l'on souhaite modifier extensivement l'environnement E.

Pour ce faire, on peut prédéfinir la taille et la géométrie d'une partie P comme expliqué par exemple en fonction d'une zone d'action du robot 10, généralement déterminée en fonction des dimensions des articulations 11, et générer géométriquement l'ensemble des parties P en conséquence, par exemple comme un simple pavage. A titre d'exemple, les parties P peuvent êtres des zones carrées de dimensions maximales 4m x 4m. Le procédé sera alors mis en oeuvre séquentiellement pour chaque partie P.

Ensuite, Pour une partie P, ledit procédé comprend une étape (a) d'obtention d'une représentation initiale Ri d'au moins ladite partie P dudit environnement E, en fonction de données acquises par ledit détecteur 9. En effet, le champ du détecteur 9 est généralement plus grand que la zone d'action du robot et donc que chaque zone P. Par représentation initiale Ri, on entend une représentation de l'état existant constaté de la partie P, i.e. avant utilisation de l'outil 3. A noter que l'étape (a) peut comprendre le déplacement du détecteur 9 avec le robot 10 de sorte à balayer la partie P (et donc acquérir des données pour toute cette partie P, en évitant d'éventuelles occultations par exemple).

Comme expliqué, ledit détecteur 9 est typiquement une caméra, en particulier stéréoscopique, de sorte que les données acquises sont des données optiques et notamment un nuage de points. Ainsi, ladite représentation initiale Ri (ainsi que des représentations attendues et finales Ra, Rf qui seront décrites plus loin) sont des modèles tridimensionnels.

Par exemple, dans le cas d'une paroi à traiter, ladite représentation initiale est un modèle 3D de la surface permettant de déterminer sa géométrie.

Cette étape (a) est de façon générale connue de l'homme du métier, qui pourra se référer en particulier à la demande FR2204180, et peut ainsi comprendre la localisation préalable de ladite partie P (dans le référentielle du robot 10) en fonction d'au moins un nuage de points tridimensionnel obtenu à partir de données acquises par le détecteur 9 (comprenant le cas échéant une phase de calibration par des moyens connus, et/ou un scan de l'environnement).

A noter qu'on peut directement placer le robot 10 devant la partie P (cas par exemple de travail sur un mur), mais selon un mode de réalisation préféré, l'étape (a) comprend également le déplacement dudit robot 10 (en utilisant lesdits moyens de déplacement 4) dans l'environnement E de sorte à se positionner en vis-à-vis de ladite partie P.

Par « placer en vis-à-vis » (ou placer en regard), on entend placer de manière telle que le robot 10 est correctement positionné par rapport à la partie P pour y opérer l'outil 3, qui en pratique a besoin de venir au contact de la surface.

On pourra utiliser de nombreuses techniques alternatives pour ce placement du robot 10 :
- le déplacement peut être simplement itératif, le robot avançant d'une distance prédéterminée (correspondant en particulier à la distance entre deux parties P successives), par exemple dans un ouvrage « unidimensionnel » tel qu'un tunnel.
- la partie P peut être géolocalisée, i.e. sa position connue dans le référentiel de l'environnement E, on utilise alors les moyens de géolocalisation 8 du robot 10 pour atteindre cette partie P.
- on peut disposer d'une représentation attendue Ra de ladite partie P dudit environnement E (mode voir plus loin), et se déplacer jusqu'à obtenir une représentation d'une potentielle partie P compatible avec cette représentation attendue, par exemple sur la base de repères prédéfinis tels que des points remarquables (« landmarks ») du type marques colorées. Comme on verra toutefois plus loin, représentations attendue et initiale ne coïncideront pas, donc il s'agit juste de vérifier une cohérence.
- On peut même combiner les différentes méthodes précédentes, par exemple si l'on dispose d'une représentation attendue « globale » de l'environnement E, tel qu'un plan 3D de l'ouvrage, et donc le système 1 peut déterminer à partir cette représentation globale la position de la partie P, y amener le robot, et vérifier la présence de landmarks attendus.

Ensuite, dans une étape (b), le procédé comprend la comparaison de la représentation initiale Ri avec la représentation attendue Ra de ladite partie P dudit environnement E.

Comme évoqué, ladite représentation attendue Ra est une représentation théorique d'un état final escompté de la partie P, après modification de l'environnement. Cette représentation doit donc être générée informatiquement, par exemple par un logiciel de rendu 3D, sur la base de plans de l'ouvrage.

Selon un mode dit « a priori », ladite représentation attendue Ra de ladite partie P dudit environnement E peut ainsi être prédéterminée, et utilisée comme entrée dudit procédé, notamment dans un mode de réalisation avec déplacement du robot 10 tel qu'évoqué précédemment. Par exemple, dans un exemple où la modification attendue de l'environnement E est le creusement du trou sur une zone constituant la partie P, la représentation initiale Ri est un modèle du sol « intact » alors que la représentation attendue Ra est un modèle du sol présentant le trou.

Alternativement, selon un autre mode de réalisation particulièrement astucieux, dit « a posteriori », l'étape (b) comprend la génération de ladite représentation attendue Ra de ladite partie P dudit environnement E en fonction de ladite représentation initiale Ri. En d'autres termes, on obtient d'abord la représentation initiale Ri, et la représentation attendue Ra est directement générée à la volée par les moyens 5 en fonction cette dernière, dont elle ainsi constitue une version « retouchée » selon un critère donné, notamment la correction d'anomalies. On comprend donc que la représentation attendue Ra est alors une représentation théorique d'un état final amélioré de la partie P.

Ladite génération de ladite représentation attendue Ra d'une partie P peut être mise en oeuvre en particulier en l'absence de représentation attendue Ra prédéterminée de ladite partie P.

Dans un premier exemple, la représentation attendue Ra générée peut être une version lissée de la représentation initiale Ri, dans laquelle des irrégularités de surface sont abrasées. Dans un deuxième exemple la représentation attendue Ra générée peut être une version plus droite de la représentation initiale Ri, dans laquelle un défaut de verticalité ou d'horizontalité est rectifié, en particulier en ponçant à certains endroits. Dans un troisième exemple la représentation attendue Ra générée peut être une version réparée de la représentation initiale Ri, dans laquelle des trous ou fissures sont rebouchés.

Pour résumer on peut utiliser un algorithme de traitement automatisé d'un représentation initiale Ri permettant d'appliquer une transformation prédéterminée, en particulier de sorte à améliorer ladite représentation initiale Ri. Toute amélioration intéressante pour l'homme du métier conduisant à une modification de l'environnement E telle qu'évoquée pourra être appliquée.

On note qu'on peut combiner plusieurs desdits algorithmes de sorte à améliorer la représentation initiale selon plusieurs critères, par exemple rendre une paroi à la fois plus verticale et plus lisse. Il suffit de les exécuter successivement sur la représentation initiale Ri.

Ce mode de réalisation a posteriori (génération de la représentation attendue Ra) présente l'intérêt d'être entièrement automatique, mais ne permet par contre pas des modifications lourdes délibérées (telles que le creusement d'un trou ou la destruction d'une paroi) qui elles requièrent une instruction spécifique qui pourra être donnée en fournissant pour cette partie P ladite représentation attendue Ra.

A ce titre il est tout à fait possible de combiner les modes a priori et a posteriori, notamment en cas de modification extensive de l'environnement E avec un ensemble de parties P : pour certaines parties P pour lesquelles une modification lourde est souhaitée, on fournit une représentation attendue Ra de ladite partie P (et donc pour ces parties on a un fonctionnement a priori), et pour les autres parties, en l'absence de représentation attendue Ra prédéterminée, les moyens 5 génèrent une représentation attendue Ra (et donc pour ces parties on a un fonctionnement a posteriori), de sorte à simplement procéder de manière automatisée à des modification légères d'amélioration.

L'objet de l'étape (b), i.e. la comparaison de la représentation initiale Ri avec la représentation attendue Ra de ladite partie P dudit environnement E, est d'identifier les différences, qui représentent la modification à effectuer. Il s'agit par exemple de soustraire les deux représentations (placées dans le même repère).

Par exemple, en cas de creusement de trou, les représentations initiale et attendues Ri, Ra vont coïncider partout sauf au niveau du trou. En cas de lissage, les représentations initiale et attendues Ri, Ra vont coïncider partout sauf au niveau des irrégularités à poncer.

Ensuite, le procédé comprend des étapes principales (c) de détermination, en fonction du résultat de ladite comparaison, d'une trajectoire du robot 10 permettant de déplacer ledit outil 3 sur ladite partie P dudit environnement E en vue d'obtenir une modification dudit environnement telle qu'une représentation finale Rf de ladite partie P dudit environnement E coïncide avec ladite représentation attendue Ra ; et (d) de commande synchronisée du robot 10 et dudit outil 3 de sorte à mettre en oeuvre ladite trajectoire et modifier, pendant ladite trajectoire, ledit environnement E au moyen dudit outil 3. Comme expliqué, ladite trajectoire met typiquement l'outil 3 en contact de la surface de ladite partie P de l'environnement de sorte à modifier cette surface (surfaçage), de la manière désirée (casser une partie, poncer, ajouter de la matière, etc.).

La représentation finale Rf est comme la représentation initiale Ri une représentation réelle de l'état de l'environnement E (par opposition à la représentation attendue Ra), mais après la mise en oeuvre de la modification, i.e. l'étape (d).

Pour résumer, au lieu de modifier progressivement la partie P avec une stratégie de type positionnement, ajustement, opération de l'outil 3, positionnement, ajustement, opération de l'outil 3, etc., qui est laborieuse, on détermine directement une trajectoire de qualité passant par toutes les positions où l'outil 3 doit être utilisé, en restant à ces positions aussi longtemps qu'il le faut, trajectoire exécutée de manière agnostique par le robot sans se préoccuper de l'outil 3. Ainsi, on n'utilise que des mécanismes connus et éprouvés de génération de trajectoire et de guidage de robot 10 pour mettre en oeuvre de manière automatique, fiable et très rapide la modification complète de la partie P.

De plus, le présent procédé est particulièrement robuste, car l'état initial de la partie P (tel que défini par la représentation initiale Ri) peut être quelconque et découvert au dernier moment.

A ce titre, l'étape (c) comprend préférentiellement :
- une sous-étape (c1) de détermination d'une ou plusieurs opérations nécessaires dudit outil 3 en fonction du résultat de ladite comparaison, en particulier l'ensemble des opérations requises dudit outil (3) en vue d'obtenir ladite modification dudit environnement E ; et
- une sous-étape (c2) de détermination de la trajectoire permettant de déplacer séquentiellement l'outil 3 de sorte à mettre en oeuvre chacune desdites opérations nécessaires dudit outil 3.

Par « opération nécessaire » dudit outil, on entend toute activation élémentaire de l'outil 3 sur ladite partie P et les paramètres décrivant ces opérations (localisation, conditions d'opération, etc.). Pour reformuler, déterminer une opération nécessaire dudit outil 3 signifie identifier ces opérations et les caractériser.

On comprend que la notion d'opération d'un outil 3 dépend de la nature de l'outil 3 et on va décrire plusieurs exemples.

Selon un premier exemple, correspondant typiquement à un outil 3 de type perceuse ou buse d'enduction (et de manière générale un outil opéré de manière sensiblement statique) :
- la sous-étape (c1) est une sous-étape de détermination d'une ou plusieurs positions cibles dudit outil 3 en fonction du résultat de ladite comparaison, avec le cas échéant les conditions d'opération de l'outil à chaque position cible dudit outil 3 (temps sur la position cible, paramètres de l'outil 3, direction et intensité d'une force appliquée sur l'outil 3, etc.) en vue d'obtenir ladite modification dudit environnement E ;
- la sous-étape (c2) est alors une sous-étape de détermination de la trajectoire permettant de placer séquentiellement l'outil 3 dans chacune des positions cibles déterminées, en vue d'opérer ledit outil 3 à chaque position cible déterminée dans lesdites conditions d'opération de l'outil associées à ladite position cible.

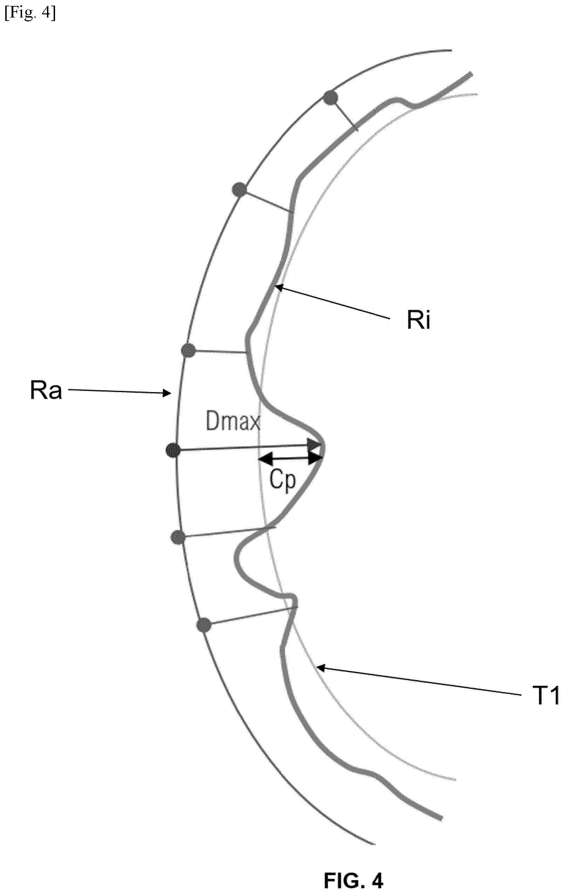

Selon un deuxième exemple, correspondant typiquement à un outil 3 de type ponceuse (et de manière générale un outil opéré en mouvement) et illustré par la **figure 4** :
- la sous-étape (c1) est une sous-étape de détermination d'une ou plusieurs trajectoires d'opération dudit outil 3, dites « passes », en fonction du résultat de ladite comparaison, avec le cas échéant les conditions d'opération de l'outil à chaque trajectoire d'opération dudit outil 3 (positions initiale et finale de la passe, vitesse de la passe, paramètres de l'outil 3, etc.) en vue d'obtenir ladite modification dudit environnement E. Il peut être prévu selon la nature de l'outil 3 que lesdites trajectoire d'opération ont une direction ou une étendue prédéfinie (par exemple dans la figure 4, les passes sont verticales et d'une largeur donnée correspondant aux dimensions de l'outil 3).
- la sous-étape (c2) est alors une sous-étape de détermination de la trajectoire « globale » comprenant séquentiellement lesdites trajectoires d'opération déterminées de l'outil 3 et généralement des trajectoires intermédiaires (i.e. des trajectoires de repositionnement, permettant simplement de passer d'une trajectoire d'opération à la suivante - sans opération de l'outil 3), en vue d'opérer ledit outil 3 lors de chacune des trajectoire d'opérations déterminée dans lesdites conditions d'opération de l'outil associées à ladite trajectoires d'opération. Pour reformuler ladite trajectoire est typiquement une alternance de trajectoires d'opération de l'outil 3 et de trajectoires de repositionnement sans opération de l'outil 3.

Dans tous les cas, la sous-étape (c1) peut être mise en oeuvre grâce à un modèle d'effet dudit outil 3 (et toute donnée qui serait nécessaire, par exemple le matériau de la paroi en cas de ponçage), et une analyse inverse : connaissant la différence entre la représentation attendue Ra et la représentation initiale Ri et l'impact dudit outil 3, les moyens 5 déterminent comment l'outil 3 doit être opéré de manière globale pour annuler cette différence, et en déduisent la ou lesdites opérations requises.

En particulier, la sous-étape (c1) peut comprendre une composante de simulation, et le cas échéant un fonctionnement itératif avec optimisation. Plus précisément, des opérations candidates de l'outil 3 sont déterminées, puis en utilisant ledit un modèle d'effet dudit outil 3, partant de la représentation initiale Ri une représentation finale « théorique » Rf' est simulée et comparée avec la représentation attendue. Si elles coïncident (par exemple à un niveau de précision prédéterminé près), ces opération candidates sont conservées, et sinon modifiées (préférentiellement en utilisant un algorithme d'optimisation connue) et la simulation répétée, etc.

La présente invention ne sera cependant limitée à aucune stratégie en particulier de sélection de positions d'intérêt, il suffit juste que le système 1 puisse d'une manière ou d'une autre modifier la partie P de sorte à gommer la différence déterminée entre la représentation initiale Ri avec la représentation attendue Ra, elle n'a pas besoin d'être optimale.

On peut par exemple procéder plus simplement, conformément au mode de réalisation de la figure 4 : dans ce mode de ponçage par passes, on considère que chaque passe dudit outil 3 présente une « profondeur de coupe » Cp, i.e. permet de supprimer des irrégularités d'une hauteur jusqu'à cette profondeur. Alors, la comparaison entre les représentations initiale et attendue Ri, Ra, permet de calculer une distance d en tout point de la partie P (selon une direction normale en la représentation attendue Ra), cette distance représentant la hauteur d'irrégularité à supprimer en chaque point. On comprend que si d>Cp en un point il faudra plusieurs passes en ce point.

En considérant que chaque trajectoire d'opération de l'outil passant par un point diminue la hauteur d'irrégularité de jusqu'à Cp, on peut déterminer facilement un ensemble de trajectoires d'opérations telles que d est nul en tout point à la fin.

Par exemple, on peut procéder itérativement en identifiant la distance maximale Dmax (qui correspond à l'irrégularité maximale), en déterminant une première trajectoire d'opération (notée T1) qui enlève Cp à Dmax, et en recommençant (nouvelle distance maximale Dmax') jusqu'à obtenir d=0 partout. Pour optimiser les trajectoires d'opération, on peut prévoir de déterminer une première représentation théorique R1 après la première trajectoire d'opération, puis sur la base de celle-ci de déterminer la deuxième trajectoire d'opération, de déterminer ensuite une deuxième représentation théorique R2 après cette deuxième trajectoire d'opération, etc.

En ce qui concerne la sous-étape (c2), à savoir la génération de trajectoire, elle pourra être effectuée de toute manière connue, en particulier grâce à un algorithme de planification, connaissant les positions de passage/trajectoires d'opérations exigées (dans le premier mode de réalisation la trajectoire a autant de points de passage que de positions cible de l'outil 3), une géométrie de l'outil 3, et éventuellement l'environnement E (en mettant en oeuvre un algorithme anti-collisions). Il s'agit essentiellement de déterminer des trajectoires intermédiaires (de repositionnement) entre les positions de passage/trajectoires d'opérations exigées, et de reconstruire la trajectoire complète. On comprend que l'ordre dans la trajectoire complète de ces points de passage/trajectoires d'opération importe peu, et on a donc un grand nombre de trajectoires possibles même si on choisira préférentiellement une trajectoire la plus courte possible.

Il suffit de générer une trajectoire qui respecte, pour chacune des positions cibles/trajectoires d'opérations déterminés, les conditions susmentionnées.

L'étape (d) comprend quant à elle deux aspects :
- la commande du robot 10 de sorte à mettre en oeuvre ladite trajectoire, classiquement avec un contrôleur adéquat des articulations actionnées 11 du robot 10 ;
- la commande dudit outil 3 de sorte à modifier, pendant ladite trajectoire, ledit environnement E au moyen dudit outil 3. Cet aspect consiste à activer l'outil 3, de sorte à mettre en oeuvre la ou les opérations de l'outil 3 déterminées à l'étape (c1), par exemple à chaque point de passage de la trajectoire où l'outil 3 est à une position cible ou lors de chaque trajectoire d'opération déterminée, dans les conditions associées, i.e. à déclencher l'effet tel que le surfaçage.

Il suffit juste que les commandes soient correctement synchronisées, ce qui ne pose pas de problème les contrôleurs existants peuvent suivre en temps réel l'avancement de la trajectoire et déclencher les commandes d'activation de l'outil 3 de manière précise. On répète que la trajectoire est mise en oeuvre de la manière prévue, le robot 10 ne se préoccupe pas de l'outil 3, on vient juste rajouter a posteriori les activations de l'outil 3 de manière coordonnée.

Comme expliqué, dans le cas d'opérations statiques de l'outil 3, la trajectoire peut marquer un temps d'arrêt prédéterminé à chaque fois que l'outil 3 arrive à une position cible, le temps que l'effet de l'outil 3 soit suffisant, par exemple s'il faut percer plus profondément.

De manière préférée, l'étape (d) comprend également l'utilisation du détecteur 9 pour confirmer l'avancement de la trajectoire et le bon positionnement de l'outil 3 vis-à-vis de la partie P à chaque position cible/trajectoire d'opération. A nouveau il s'agit juste d'une confirmation, en particulier pour traçabilité, car il n'y a normalement pas lieu de corriger la trajectoire une fois qu'elle a été définie et lancée, à moins que le robot 10 ait par exemple été gêné par un obstacle inattendu. Dans un tel cas, il conviendrait de relancer le procédé.

Grâce à ces étapes (c) et (d), le présent procédé permet ainsi très facilement de réaliser n'importe quelle modification de l'environnement E, en utilisant des techniques de contrôle de robots fiables et éprouvées.

A noter que les étapes (c) et (d) peuvent, si le système 1 utilise plusieurs outils 3 comprendre en pratique plusieurs fragments de la trajectoire chacun avec un outil 3 différent. Par exemple on peut avoir une première trajectoire avec un burineur (premier outil) pour faire le gros du travail puis une seconde trajectoire avec une ponceuse (second outil) pour la finition.

Les trajectoires peuvent être avec des robots 10 différents (si par exemple le système 1 comprend deux bras), mais également avec le même robot 10 (s'il a un organe de préhension), la première trajectoire comprenant alors une phase finale de dépose du premier outil avec l'organe de préhension dans une position de stockage dédiée à ce premier outil, la deuxième trajectoire comprenant une phase initiale de saisie du deuxième outil de puis une autre position de stockage dédiée à ce deuxième outil, etc.

Dans tous les cas on appelle « trajectoire » l'ensemble des trajectoires d'au moins un robot 10 dudit système, de sorte que même en cas de pluralité d'outils 3 et/ou robots 10, l'étape (d) ne change pas.

De manière préférée, le procédé comprend alors une étape (e) d'obtention de ladite représentation finale Rf de ladite partie P dudit environnement E en fonction de données acquises par ledit détecteur 9, et de vérification qu'elle coïncide avec ladite représentation attendue Ra.

En effet, on a jusque-là seulement supposé que la trajectoire permettrait d'obtenir une modification dudit environnement E telle qu'une représentation finale Rf de ladite partie P dudit environnement E coïncide avec ladite représentation attendue Ra.

L'étape (e) consiste à obtenir réellement cette représentation finale, dans les mêmes conditions qu'à l'étape (a) et à la comparer à la représentation attendue Ra, dans les mêmes conditions qu'à l'étape (b).

Si les deux coïncident en effet (différence partout inférieure à un seuil de précision), alors l'effet de l'outil 3 a été conforme à ce qui était prévu.

Dans le cas contraire, il y a eu un écart, par exemple parce que le matériau n'avait pas exactement les propriétés attendues (un peu trop dur) ou parce que l'outil n'avait pas exactement les performances requises (usure d'un élément, etc.).

Le procédé comprend alors très avantageusement la répétition des étapes (b) à (d) si ladite représentation finale Rf ne coïncide pas avec ladite représentation attendue, en utilisant la représentation finale Rf comme nouvelle représentation initiale Ri. On remarque que la nouvelle étape (b) est en pratique généralement confondue avec l'étape (e).

Sauf en cas d'erreur massive, le procédé converge très rapidement et il n'y a normalement que des corrections minimes à faire, de sorte que la nouvelle trajectoire va être très courte et exécutée en très peu de temps.

De manière avantageuse on va alors également répéter l'étape (e) pour vérifier qu'une nouvelle représentation finale Rf de ladite partie P dudit environnement E coïncide cette fois avec ladite représentation attendue Ra. Il est possible qu'il faille encore répéter les étapes (b) à (d) et le cas échéant (e), mais dans la très grande majorité des cas on n'aura qu'une ou deux itérations.

A ce stade, si jamais on a plusieurs partie P, on peut passer à la partie suivante en relançant le procédé. Le cas échéant, la nouvelle occurrence de l'étape (a) comprend comme évoqué le déplacement dudit robot 10 dans l'environnement E de sorte à se positionner en vis-à-vis de ladite nouvelle partie P, et ainsi de suite.

### Système

Selon un deuxième aspect, l'invention concerne le système 1 pour la mise en oeuvre du procédé selon le premier aspect.

Le système comprend
- Au moins un outil 3 apte à modifier ledit environnement E ;
- au moins un robot 10 muni d'articulations actionnées 11 pour la manipulation dudit outil 3
- des moyens de traitement de données 5 (et éventuellement une mémoire 7 et une interface 8) ;
- le cas échéant des moyens de déplacement 4 du robot 10 et/ou des moyens de géolocalisation 8 du robot 10.
- au moins un détecteur 9 tel qu'une caméra en particulier stéréoscopique.

Les moyens de traitement de données 5 sont configurés pour :
- Obtenir une représentation initiale Ri d'au moins une partie P dudit environnement E en fonction de données acquises par ledit détecteur 9;
- comparer la représentation initiale Ri avec une représentation attendue Ra de ladite partie P dudit environnement E.
- Déterminer, en fonction du résultat de ladite comparaison, une trajectoire du robot 10 permettant de déplacer ledit outil 3 sur ladite partie P dudit environnement E en vue d'obtenir une modification dudit environnement telle qu'une représentation finale Rf de ladite partie P dudit environnement E coïncide avec ladite représentation attendue Ra ;
- Commander de manière synchronisée le robot 10 et ledit outil 3 de sorte à mettre en oeuvre ladite trajectoire et modifier, pendant ladite trajectoire, ledit environnement E au moyen dudit outil 3 ;
- Optionnellement obtenir ladite représentation finale Rf de ladite partie P dudit environnement E en fonction de données acquises par ledit détecteur 9, et vérifier qu'elle coïncide avec ladite représentation attendue Ra (pour le cas échéant répéter la détermination de trajectoire et la commande du robot 3 et de l'outil 3) si ladite représentation finale Rf ne coïncide pas avec ladite représentation attendue Ra, en utilisant la représentation finale Rf comme nouvelle représentation initiale Ri.

### Produit programme d'ordinateur

Selon un troisième et un quatrième aspects, l'invention concerne un produit programme d'ordinateur comprenant des instructions de code pour l'exécution (en particulier sur les moyens de traitement de données 5) d'un procédé selon le premier aspect de modification d'un environnement E dans lequel est placé un système 1, ainsi que des moyens de stockage lisibles par un équipement informatique (la mémoire 6) sur lequel on trouve ce produit programme d'ordinateur.

## Revendications

1. Procédé de modification d'un environnement (E) dans lequel est placé un système (1) comprenant :
- Au moins un outil (3) apte à modifier ledit environnement (E) ;
- au moins un robot (10) muni d'articulations actionnées (11) pour la manipulation dudit outil (3) ;
- des moyens de traitement de données (5) ;
- au moins un détecteur (9) ;
le procédé étant **caractérisé en ce qu'**il comprend la mise en oeuvre par les moyens de traitement de données (5) d'étapes de :
(a) Obtention d'une représentation initiale (Ri) d'au moins une partie (P) dudit environnement (E) en fonction de données acquises par ledit détecteur (9);
(b) Comparaison de la représentation initiale (Ri) avec une représentation attendue (Ra) de ladite partie (P) dudit environnement (E) ;
(c) Détermination, en fonction du résultat de ladite comparaison, d'une trajectoire du robot (10) permettant de déplacer ledit outil (3) sur ladite partie (P) dudit environnement (E) en vue d'obtenir une modification dudit environnement (E) telle qu'une représentation finale (Rf) de ladite partie (P) dudit environnement (E) coïncide avec ladite représentation attendue (Ra) ;
(d) Commande synchronisée du robot (10) et dudit outil (3) de sorte à mettre en oeuvre ladite trajectoire et modifier, pendant ladite trajectoire, ledit environnement (E) au moyen dudit outil (3).

2. Procédé selon la revendication 1, dans lequel l'étape (a) comprend la localisation dans l'environnement (E) de ladite partie (P) en fonction des données acquises par le détecteur (9).

3. Procédé selon l'une des revendications 1 et 2, dans lequel ledit robot (10) est mobile dans ledit environnement (E), l'étape (a) comprenant également le déplacement dudit robot (10) dans l'environnement (E) de sorte à se positionner en vis-à-vis de ladite partie (P).

4. Procédé selon l'une des revendications 1 à 3, comprenant une étape (a0) de division dudit environnement (E) en un ensemble de parties (P), et la mise en oeuvre du procédé pour chacune des parties (P) dudit ensemble.

5. Procédé selon l'une des revendication 1 à 4, dans lequel ladite représentation attendue (Ra) de ladite partie (P) dudit environnement (E) est prédéterm inée.

6. Procédé selon l'une des revendications 1 à 4, dans lequel l'étape (b) comprend la génération de ladite représentation attendue (Ra) de ladite partie (P) dudit environnement (E) en fonction de ladite représentation initiale (Ri).

7. Procédé selon l'une des revendications 1 à 6, comprenant une étape (e) d'obtention de ladite représentation finale (Rf) de ladite partie (P) dudit environnement (E) en fonction de données acquises par ledit détecteur (9), et de vérification qu'elle coïncide avec ladite représentation attendue (Ra).

8. Procédé selon la revendication 7, comprenant la répétition des étapes (b) à (d) si ladite représentation finale (Rf) ne coïncide pas avec ladite représentation attendue, en utilisant la représentation finale (Rf) comme nouvelle représentation initiale.

9. Procédé selon l'une des revendications 1 à 8, dans lequel ledit détecteur (9) est une caméra, en particulier stéréoscopique, et lesdites représentations initiale, attendu et finale (Ri, Ra, Rf) sont des modèles tridimensionnels.

10. Procédé selon l'une des revendications 1 à 9, dans lequel l'étape (c) comprend une sous-étape (c1) de détermination d'une ou plusieurs opérations nécessaires dudit outil (3) en fonction du résultat de ladite comparaison ; et une sous-étape (c2) de détermination de la trajectoire permettant de déplacer séquentiellement l'outil (3) de sorte à mettre en oeuvre chacune desdites opérations nécessaires dudit outil (3).

11. Procédé selon l'une des revendication 1 à 10, dans ledit outil (3) est un outil de modification de la surface, ladite modification de l'environnement (E) étant une modification de l'état de surface d'une paroi dudit environnement (E), ledit environnement (E) étant en particulier un ouvrage de bâtiment ou génie civil.

12. Procédé selon la revendication 11, dans lequel la trajectoire met l'outil (3) en contact de la surface de ladite partie (P) de l'environnement de sorte à modifier cette surface.

13. Système (1) pour la modification d'un environnement (E) dans lequel est placé ledit système (1), comprenant :
- Au moins un outil (3) apte à modifier ledit environnement (E) ;
- au moins un robot (10) muni d'articulations actionnées (11) pour la manipulation dudit outil (3) ;
- des moyens de traitement de données (5) ;
- au moins un détecteur (9) ;
**caractérisé en ce que** les moyens de traitement de données (5) sont configurés pour :
- Obtenir une représentation initiale (Ri) d'au moins une partie (P) dudit environnement (E) en fonction de données acquises par ledit détecteur (9) ;
- comparer la représentation initiale (Ri) avec une représentation attendue (Ra) de ladite partie (P) dudit environnement (E) ;
- Déterminer, en fonction du résultat de ladite comparaison, une trajectoire du robot (10) permettant de déplacer ledit outil (3) sur ladite partie (P) dudit environnement (E) en vue d'obtenir une modification dudit environnement telle qu'une représentation finale (Rf) de ladite partie (P) dudit environnement (E) coïncide avec ladite représentation attendue (Ra) ;
- Commander de manière synchronisée le robot (10) et ledit outil (3) de sorte à mettre en oeuvre ladite trajectoire et modifier, pendant ladite trajectoire, ledit environnement (E) au moyen dudit outil (3).

14. Produit programme d'ordinateur comprenant des instructions de code pour l'exécution d'un procédé selon l'une des revendications 1 à 13 de modification d'un environnement (E) dans lequel est placé un système (1), lorsque ledit programme est exécuté sur un ordinateur.

15. Moyen de stockage lisible par un équipement informatique sur lequel est enregistré un produit programme d'ordinateur comprenant des instructions de code pour l'exécution d'un procédé selon l'une des revendications 1 à 13 de modification d'un environnement (E) dans lequel est placé un système (1).
